# EUROPEAN PATENT APPLICATION

(11) **EP 2 224 446 A1**
(43) Date of publication of application: **01.09.2010**
(21) Application number: 09011540.3
(22) Date of filing: 09.09.2009
(51) Int. Cl.: G11B 19/02

(54) **Program recording apparatus and method for stopping recording programs**

(30) Priority: 26.02.2009 JP 2009044768
(71) Applicant: Kabushiki Kaisha Toshiba, Minato-ku Tokyo (JP)
(72) Inventor: Kuwahara, Kazuki, Tokyo (JP)
(74) Representative: HOFFMANN EITLE

(57) **Abstract**

A program recording apparatus includes: a plurality of tuners; a recording processing module configured to record one or more broadcast programs; a program number determining module configured to determine the number of programs being recorded when a recording stop instruction is received; a thumbnail image generating module configured to generate thumbnail images from reception data of the programs being recorded; a recording stop selection screen generating module configured to set areas for the respective programs being recorded in a recording stop selection screen, displaying pieces of program information of the programs being recorded in the thus-set areas, respectively, and displaying the thumbnail images in clip form in the thus-set areas, respectively; and a stop selection instructing module configured to allow selecting one or more programs whose recording should be stopped from the programs being recorded through the recording stop selection screen.

## Description

### CROSS REFERENCE TO RELATED APPLICATION(S)

The present disclosure relates to the subject matters contained in Japanese Patent Application No. 2009-044768 filed on February 26, 2009, which are incorporated herein by reference in its entirety.

### FIELD

The present invention relates to a program recording apparatus capable of simultaneously recording TV broadcast programs received by plural tuners and to a method for stopping recording the TV broadcast programs.

### BACKGROUND

A program recording apparatus is widely used which is equipped with plural (in general, two) tuners and is capable of simultaneously recording TV broadcast programs received by the respective tuners, to thereby meet the need to record broadcast programs whose broadcast times overlap with each other.

In such conventional program recording apparatus, while two programs are being recorded simultaneously, one of them may be displayed for viewing. If a recording stop instruction is received in this state, first, the user is requested to decide whether to stop the recording of the program being displayed (a first selection screen is displayed). If the user decides to stop the recording of the program being displayed, the recording of this program is stopped and the other program that is being recorded but has not been displayed comes to be displayed instead. The user is requested to decide whether to stop the recording of this program (a second selection screen is displayed).

If the user does not give an instruction to stop the recording through the first selection screen, a recording schedule screen is displayed and the user is requested to select and cause execution of processing of stopping the recording of the program that is being recorded but not being displayed. If the user decides, through the second selection screen, to stop the recording of the program that is being recorded but not being displayed, the recording of this program is stopped, as a result of which processing of stopping the recording of both programs is completed. If the user does not give an instruction to stop the recording through the second selection screen, the recording of the program that has come to be displayed is continued and the series of processing steps is finished.

That is, in the above-described conventional recording stopping method, if a recording stop instruction is received while plural programs are being recorded, the user is obliged to make troublesome operations to give recording stop/continuation instructions on a program-by-program basis.

There is disclosed in JP-A-2001-197413 a method for displaying a list of the titles of programs being recorded and causing the user to decide on a program whose recording should be stopped, when the user has manipulated a recording stop button. However, in the method disclosed in JP-A-2001-197413, although operations for giving recording stop/continuation instructions for plural programs are simplified, the user is required to decide whether to stop recording of each program only on the basis of its title displayed. If there are programs having similar titles, the user may erroneously decide on a program whose recording should be stopped.

As described above, in the conventional program recording apparatus, if a recording stop instruction is received in a state that plural programs are being recorded simultaneously, it is necessary for the user to make operations for giving recording stop/continuation instructions on a program-by-program basis. Although the method has been proposed which causes the user to select a program whose recording should be stopped by displaying a list of the titles of all programs being recorded, this method is associated with the problem that the user may erroneously decide on a program whose recording should be stopped because he or she is to make such a decision only on the basis of its title displayed.

### SUMMARY

One of objects of the present invention is to provide a program recording apparatus and its recording stopping method which allow the user to give an instruction to stop recording of an arbitrary program easily without making an erroneous recognition when a recording stop instruction is received in a state that plural programs are being recorded simultaneously.

According to an aspect of the present invention, there is provided a program recording apparatus including: a plurality of tuners configured to receive broadcast programs independently; a recording processing module configured to record one broadcast program received by one of the plural tuners or simultaneously recording plural broadcast programs received by all or part of the plural tuners; a program number determining module configured to determine the number of programs being recorded when a recording stop instruction is received; a thumbnail image generating module configured to generate thumbnail images from reception data of the programs being recorded, respectively, when determined that the number of programs being recorded is plural; a recording stop selection screen generating module configured to set areas for the respective programs being recorded in a recording stop selection screen, displaying pieces of program information of the programs being recorded in the thus-set areas, respectively, and displaying the thumbnail images in clip form in the thus-set areas, respectively; and a stop selection instructing module configured to allow selecting one or more programs whose recording should be stopped from the programs being recorded through the recording stop selection screen.

According to another aspect of the present invention, there is provided a program recording apparatus including: a plurality of tuners configured to receive broadcast programs independently; a recording processing module configured to record one broadcast program received by one of the plural tuners or simultaneously recording plural broadcast programs received by all or part of the plural tuners; a program number determining module configured to determine the number of programs being recorded when a recording stop instruction is received; a thumbnail image generating module configured to generate thumbnail images from reception data of the programs being recorded, respectively, when determined that the number of programs being recorded is plural; a recording stop selection screen generating module configured to set list frames for the respective programs being recorded in a recording stop selection screen, displaying pieces of program information of the programs being recorded in the thus-set list frames, respectively, and to display a thumbnail image of a selected list frame in clip form in the recording stop selection screen; and a stop selection instructing module configured to allow selecting a program or programs whose recording should be stopped from the programs being recorded through the recording stop selection screen.

According to still another aspect of the present invention, there is provided a method for stopping recording by a program recording apparatus capable of receiving and recording plural broadcast programs simultaneously, wherein the method including: determining the number of programs being recorded when a recording stop instruction is received; generating thumbnail images from reception data of the programs being recorded, respectively, if it is determined that the number of programs being recorded is plural; setting areas for the respective programs being recorded in a recording stop selection screen, displaying pieces of program information of the programs being recorded in the thus-set areas, respectively, and displaying the thumbnail images in clip form in the thus-set areas, respectively; and allowing to select a program or programs whose recording should be stopped from the programs being recorded through the recording stop selection screen.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.
Fig. 1 is a block diagram showing a general configuration of an information recording apparatus according to an embodiment of the present invention which has functions of a program recording apparatus.
Fig. 2 is a flowchart of a process which is executed upon input of a recording stop instruction in the embodiment.
Fig. 3 shows an example single recording stop screen used in the embodiment.
Fig. 4 shows an example double recording stop screen used in the embodiment.
Fig. 5 shows an example display screen used in another embodiment of the invention in which two programs being recorded are shown in list form.

### DETAILED DESCRIPTION OF THE EMBODIMENTS

An embodiment of the present invention will be hereinafter described with reference to the drawings.

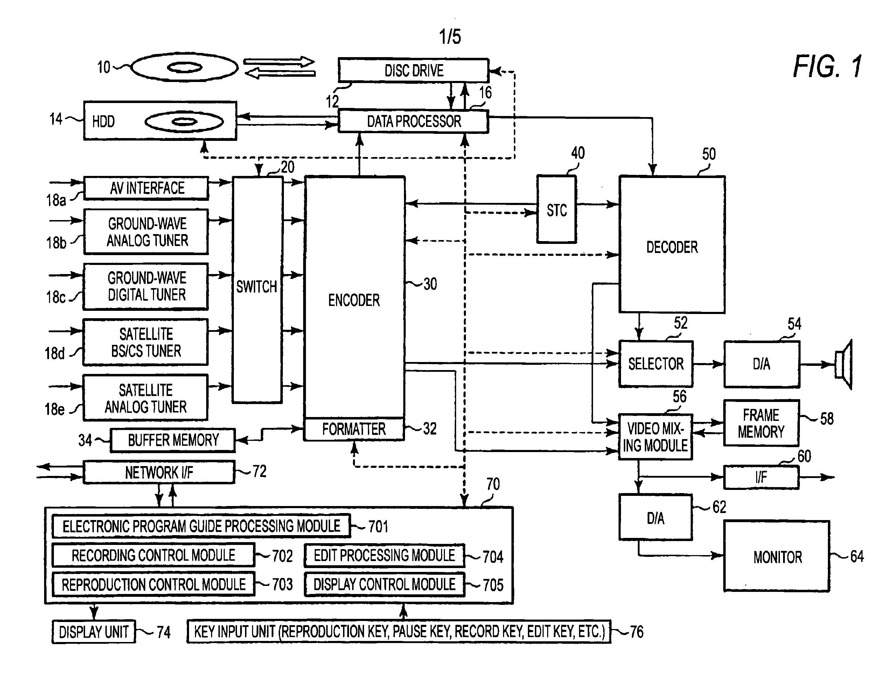

Fig. 1 is a block diagram showing a general configuration of an information recording apparatus according to an embodiment of the invention which has functions of a program recording apparatus. The information recording apparatus of Fig. 1 can record programs on both of an optical disc 10 such as a DVD and the hard disk of a hard disk drive 14. The information recording apparatus may be equipped with, for example, a semiconductor memory as a program recording destination.

In Fig. 1, main components of a recording section are shown on the left side and main components of a reproducing section are shown on the right side. The information recording apparatus is equipped with two kinds of disc drives, that is, a disc drive 12 and the hard disk drive 14. The disc drive 12 rotationally drives the optical disc 10 and writes or reads information to or from it. The disc drive 12 is equipped with an optical disc rotation control system, a laser drive system, an optical system, etc. The hard disk drive 14 drives the hard disk and writes or reads information to or from it.

The information recording apparatus is equipped with a data processor 16. The data processor 16 supplies recording data to the disc drive 12 and the hard disk drive 14, and receives reproduction data that are read by the disc drive 12 and the hard disk drive 14. The data processor 16, which processes recording data or reproduction data of a prescribed unit, is equipped with a buffer circuit, a modulation/demodulation circuit, an error correction circuit, etc.

The information recording apparatus is also equipped with an encoder 30, a decoder 50, and a microcomputer block 70. The encoder 30 receives an external analog video signal and an external analog audio signal from an AV interface 18a via a switch 20. The encoder 30 selectively receives reception signals from a ground-wave analog tuner 18b, a ground-wave digital tuner 18c, a satellite BS/CS tuner 18d, and a satellite analog tuner 18e via the switch 20. For example, the information recording apparatus can record a program received by the ground-wave digital tuner 18c in the hard disk drive 14 and, at the same time, record a program received by the satellite BS/CS tuner 18d or reproduce it using the decoder 50. The ground-wave digital tuner 18c is what is called a double tuner capable of receiving and outputting programs on two channels simultaneously. The switch 20 can select two programs simultaneously according to a request.

The encoder 30 is equipped with a transport stream processing module and plural encoders. Each encoder is equipped with an analog-to-digital converter, video encoders (a main video encoder and a sub-video encoder), and an audio encoder. The analog-to-digital converter digitizes an input analog video signal and analog audio signal. The main video encoder encodes a main video signal of the digital video signal, the audio encoder encodes the digital audio signal, and the sub-video encoder encodes a sub-video signal of the digital video signal. More specifically, the video encoders compress the digital video signal at a variable bit rate according to the MPEG2 or MPEG1 standard. The audio encoder compresses the digital audio signal at a fixed bit rate according to the MPEG or AC-3 standard.

When a sub-video signal (e.g., a signal from a DVD video player having an independent output terminal for a sub-video signal) is input to the encoder 30 from the AV interface 18a or when a DVD video signal containing a sub-video signal is received by a TV tuner, the sub-video signal in the DVD video signal is encoded (run-length-coded) by the sub-video encoder into a sub-video bit map.

An encoded output signal of the encoder 30 is converted by a formatter 32 into a signal having a prescribed DVD format, which is supplied to the data processor 16. A buffer memory 34 is connected to the formatter 32, and the encoded output signal is buffered by the buffer memory 34. More specifically, an encoded digital video signal, digital audio signal, and sub-video data are packed by the formatter 32 into a video pack, an audio pack, and a sub-video pack, which are collected and converted into a signal having a format prescribed by the DVD-Video standard (DVD-Video format) or a format prescribed by the DVD Video Recording standard (DVD-VR format).

There may occur a case that a packet elementary stream that is extracted from a transport stream is directly recorded on the hard disk of the hard disk drive 14 from the encoder 30.

When a compressed digital video signal and digital audio signal are directly input to the encoder 30, the encoder 30 may supply them directly to the formatter 32. And the encoder 30 may supply an analog-to-digital-converted digital video signal and audio signal directly to a video mixing module 56 and an audio selector 52.

Format data (e.g., video, audio, sub-video data packs) and management information that have been generated by the formatter 32 are supplied to the hard disk drive 14 or the disc drive 12 via the data processor 16 and recorded on the hard disk or the optical disc 10. The format data and the management data recorded on the hard disk or the optical disc 10 can be transferred to the optical disc 10 or the hard disk via the data processor 16 and the disc drive 12 and recorded thereon.

The data processor 16 can perform edit processing of deleting part of video objects constituting program data recorded on the hard disk or the optical disc 10 or connecting parts of video objects constituting plural different program data.

The microcomputer block 70 is equipped with an MPU (microprocessing unit) or a CPU (central processing unit), a ROM in which control programs etc. are written, and a RAM for providing a work area that is necessary for running a program. Put in functional terms, the microcomputer block 70 is equipped with an electronic program guide processing module 701, a recording control module 702, a reproduction control module 703, an edit processing module 704, and a display control module 705.

Among MPU execution results, ones to be communicated to the user are displayed on a display unit 74 of the information recording apparatus or OSD (on-screen display)-displayed on a monitor display 64 that is connected to the information recording apparatus. Having FL tubes or LEDs, the display unit 74 can display various kinds of information even while the main power of the information recording apparatus is off.

The microcomputer block 70 can be connected to an external network via a network interface 72, and can thus take in an electronic program guide over the external network.

The microcomputer block 70 controls the disc drive 12, the hard disk drive 14, the data processor 16, the encoder 30, the decoder 50, etc. on the basis of time data that is supplied from an STC (system time clock) generating module 40. Whereas recording and reproducing operations are performed in sync with a time clock that is supplied from the STC generating module 40, other kinds of processing may be performed with timing that is independent of the STC generating module 40.

An operation input signal is input to the microcomputer block 70 from a key input unit 76. For example, the key input unit 76 includes operation switches etc. provided on the main body of the information recording apparatus and a remote controller which is separated from the main body. Alternatively, the key input unit 76 may be a personal computer that is connected to the information recording apparatus by wired communication or wireless communication. For example, the key input unit 76 is equipped with a program guide display key, a calendar display key, a recording schedule program list display key, a reproduction program list display key, a delete key, an enter key, and a four-way key. The four-way key has upward, downward, rightward, and leftward keys. The key input unit 76 is also equipped with blue, red, green, and yellow keys to which respective functions can be assigned as appropriate. The information recording apparatus performs program recording schedule, program recording according to a program recording schedule result, reproduction of a recorded program, pause of reproduction, edit (e.g., deletion) of a recorded program, or the like on the basis of an operation input (selection operation) made through the key input unit 76.

The decoder 50 is equipped with a separator, a memory, video decoders (a main video decoder and a sub-video decoder), an audio decoder, and a video processor. The separator separates a DVD format signal having a pack structure into packs and takes them out. The memory is used when pack separation or other signal processing is performed. The main video decoder decodes main video data (video pack content) that has been separated by the separator. The sub-video decoder decodes sub-video data (sub-video pack content) that has been separated by the separator. The audio decoder decodes audio data (audio pack content) that has been separated by the separator. The video processor combines the decoded sub-video (a menu, a highlight button, a subtitle, etc.) with the decoded main video.

A video signal that is output from the decoder 50 is input to the video mixing module 56. The video mixing module 56 combines text data, for example, with the video signal. Lines for directly taking in signals from the AV interface 18a, the ground-wave analog tuner 18b, the ground-wave digital tuner 18c, the satellite BS/BC tuner 18d, and the satellite analog tuner 18e are connected to the video mixing module 56. A frame memory 58 to be used as a buffer is connected to the video mixing module 56. An analog video signal that is output from the video mixing module 56 is output to the outside as it is via an interface (I/F) 60. And a digital video signal that is output from the video mixing module 56 is converted by a digital-to-analog converter 62 into an analog video signal, which is output to the outside (e.g., monitor 64).

A digital audio signal that is output from the decoder 50 is supplied to a digital-to-analog converter 54 via the selector 52 and converted by the digital-to-analog converter 54 into an analog audio signal, which is output to the outside (e.g., speakers). The selector 52 is controlled by a selection signal that is supplied from the microcomputer block 70. As a result, in directly monitoring a digital signal supplied from the AV interface 18a or the ground-wave digital tuner 18c, the selector 52 can directly select a signal that has passed through the encoder 30 without being processed.

During recording, the formatter 32 of the encoder 30 generates division information and sends it to the MPU of the microcomputer block 70 on a regular basis. The division information includes the number of packs of a VOBU, an end address of an I-picture starting from the head of the VOBU, a reproduction time of the VOBU, etc.

In the information recording apparatus, to continue reproduction of a recorded program without interruption while data of the recorded program is accessed (sought), a minimum unit of information that should be continuous is determined. A recording area of this unit information is called CDA (contiguous data area). Information of a multiple of the capacity (16 sectors) of an ECC (error correcting code) block is recorded in a CDA.

The data processor 16 receives VOBU-unit data from the formatter 32 of the encoder 30, generates CDA-unit data from the VOBU-unit data, and supplies the CDA-unit data to the disc drive 12 or the hard disk drive 14. The MPU of the microcomputer block 70 generates management information that is necessary for reproduction of recoded data, and sends the generated management information to the data processor 16 upon recognizing a data recording end command. The management information is thus recorded.

Next, recording schedule performed by the above-described information recording apparatus will be described. In response to an operation (pressing) of the program guide display key, the electronic program guide processing module 701 and the display control module 705 of the microcomputer block 70 display an electronic program guide on the monitor 64. In response to an operation (pressing) of the four-way key in a state that the electronic program guide is displayed on the monitor 64, the cursor is moved from one program cell of the electronic program guide to another. In response to an operation (pressing) of the enter key in a state that the cursor is located at a desired program cell, recording of the desired program is scheduled. Recording of plural programs can be scheduled by executing this procedure repeatedly. The recording control module 702 records programs according to a result of recording schedule.

In scheduling the recording schedule, it is possible to schedule recording of another program in a time slot in which recording of a certain program has already been scheduled. Technically, the number of programs that can be recorded simultaneously is arbitrary. However, in the embodiment, to simplify the description, it is assumed that two programs (i.e., a program to be displayed and a program not to be displayed) can be recorded simultaneously.

A recording stopping process which is executed in the above-configured information recording apparatus will be described below.

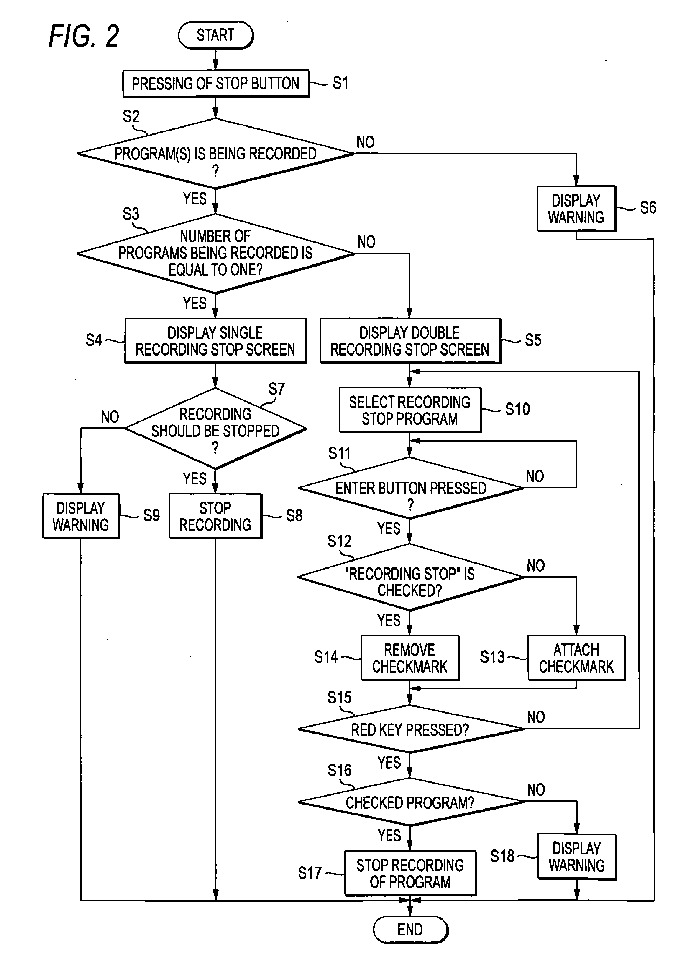

Fig. 2 is a flowchart of a process which is executed in response to input of a recording stop instruction. Referring to Fig. 2, when a recording stop operation is made (step S1), it is determined at step S2 whether recording is being performed. If recording is being performed, it is determined at step S3 whether the number of programs being recorded is equal to one. If the number of programs being recorded is equal to one, a single recording stop screen is displayed at step S4. If the number of programs being recorded is not equal to one, that is, if it is equal to two, a two program recording (what is called double recording) stop screen is displayed at step S5. In either case, the process stands by until the user makes an operation. If it is determined at step S2 that recording is not being performed, a warning to the effect that there is no program whose recording should be stopped is displayed at step S6 and the process is finished.

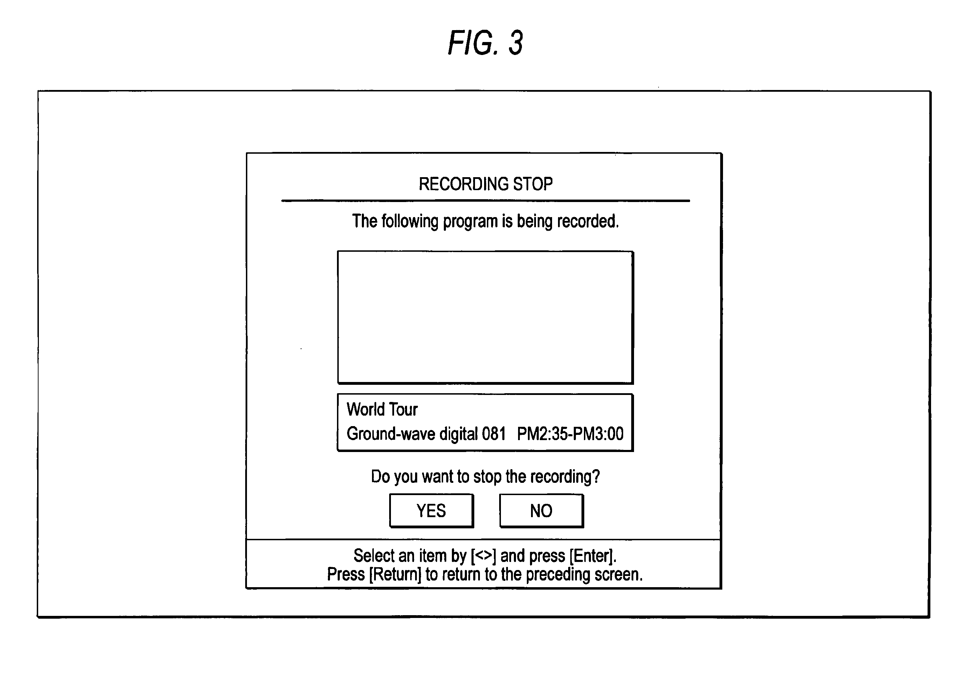

At step S4, the single recording stop screen is displayed as shown in Fig. 3. That is, for example, program information such as a title, a channel, and a recording schedule time of the program being recorded and selection buttons "yes" and "no" for confirming the stopping of recording are displayed and a thumbnail image for preventing an erroneous recognition is displayed in clip form. This allows the user to recognize part of the actual content of the program by viewing it and hence can reduce the probability of an erroneous stop of recording.

If an operation for confirming the stopping of recording is made through the single recording stop screen (in the example of Fig. 3, "yes" is selected by a cursor operation or a direction key operation and the enter key is pressed) at step S7, the recording of the indicated program is stopped at step S8. If "no" is selected, a warning "the stopping of recording is cancelled" is displayed at step S9 and the process is finished.

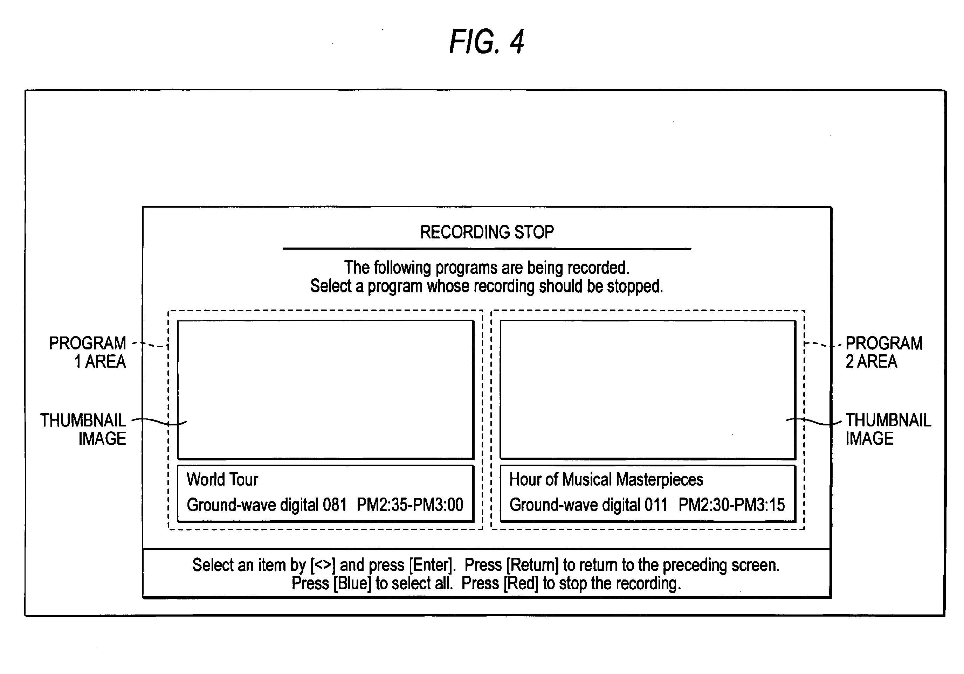

On the other hand, at step S5, the double recording stop screen is displayed as shown in Fig. 4. That is, for example, pieces of program information such as titles, channels, and recording schedule times and thumbnail images of two programs (hereinafter referred to as program 1 and program 2) being recorded are acquired and an operation screen which allows the user to selectively give instructions as to whether to stop the recording of the programs. For example, as shown in Fig. 4, the operation screen is such that prescribed areas are set for the respective programs and program information such as a title, a channel, and a recording schedule time of a program and a thumbnail image (clip) for preventing an erroneous recognition are displayed in each area. The two areas are selection areas for the respective programs; for example, they are arranged side by side on the screen and whether they are selected or not is indicated by two brightness levels (light and dark).

If in the double recording screen one area is selected (made light) by a cursor operation or a direction key operation at step S10 and the enter button is pressed at step S11, it is determined at step S12 whether the item "recording stop" is checked. If the item "recording stop" is not checked, it is checked at step S13. If the item "recording stop" is checked, the checkmark is removed at step S14. Steps S10-S14 are repeated until the red color key button (stop execution button) is pressed at step S15. In this manner, one or both of program 1 and program 2 can be selected. If the red button is pressed at step S15, it is determined at step S16 whether there exists a program for which the item "recording stop" is checked. If such a program exists, its recording is stopped at step S17 and the process is finished.

If it is determined at step S16 that there is no program for which the item "recording stop" is checked, a warning to the effect that no recording stop program is selected is displayed at step S18. Then, the process returns to step S10 to continue execution of the following steps.

As described above, in the information recording apparatus having the above configuration, when a recording stop instruction is received, whether single recording or multiple recording is being performed is determined on the basis of the number of programs being recorded. If multiple recording is being performed, thumbnail images of the respective programs being recorded are acquired and displayed side by side in the form of clip images. Therefore, the user can decide whether to stop the recording of each program while viewing its actual image. Capable of easily choosing, through the same screen, programs whose recording should be stopped, the user can easily give, at the same time, instructions to stop the recording of two programs.

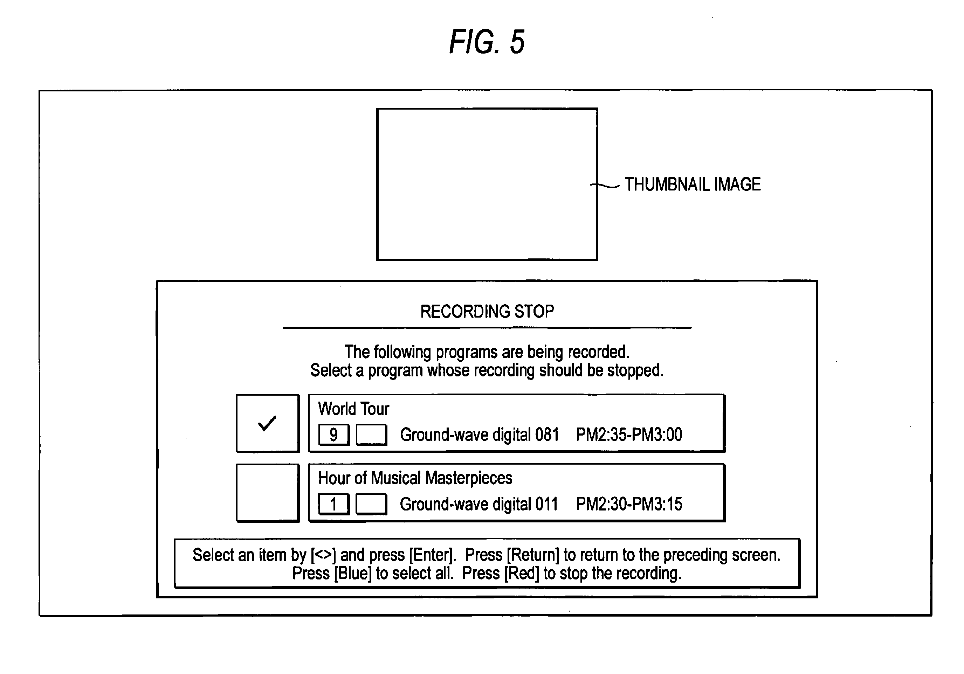

Fig. 5 shows a display screen used in another embodiment of the invention in which two programs being recorded are shown in list form rather than in two areas (described above). In this embodiment, list frames are set for respective programs being recorded and pieces of program information are displayed in the respective list frames. And a thumbnail image of a selected program is displayed in clip form in a prescribed area of the screen. This allows the user to give a recording stop instruction while recognizing part of the actual content of each program.

As described above, there is provided a program recording apparatus and its recording stopping method which allow the user to give an instruction to stop recording of an arbitrary program easily without making an erroneous recognition when a recording stop instruction is received in a state that plural programs are being recorded simultaneously.

The present invention is not limited to the above embodiments themselves and, in the practice stage, may be embodied in such a manner that constituent elements are modified without departing from the spirit and scope of the invention. For example, although the embodiments are directed to the case that the number of programs that can be recorded simultaneously is two, the invention is applicable to a case that the number of programs that can be recorded simultaneously is three or more. Various inventions can be conceived by properly combining plural constituent elements disclosed in each embodiment. For example, several ones of the constituent elements of each embodiment may be omitted. Furthermore, constituent elements of different embodiments may be combined as appropriate.

## Claims

1. A program recording apparatus comprising:
a plurality of tuners configured to receive broadcast programs independently;
a recording processing module configured to record one broadcast program received by one of the plural tuners or simultaneously recording plural broadcast programs received by all or part of the plural tuners;
a program number determining module configured to determine the number of programs being recorded when a recording stop instruction is received;
a thumbnail image generating module configured to generate thumbnail images from reception data of the programs being recorded, respectively, when determined that the number of programs being recorded is plural;
a recording stop selection screen generating module configured to set areas for the respective programs being recorded in a recording stop selection screen, displaying pieces of program information of the programs being recorded in the thus-set areas, respectively, and displaying the thumbnail images in clip form in the thus-set areas, respectively; and
a stop selection instructing module configured to allow selecting one or more programs whose recording should be stopped from the programs being recorded through the recording stop selection screen.

2. A program recording apparatus comprising:
a plurality of tuners configured to receive broadcast programs independently;
a recording processing module configured to record one broadcast program received by one of the plural tuners or simultaneously recording plural broadcast programs received by all or part of the plural tuners;
a program number determining module configured to determine the number of programs being recorded when a recording stop instruction is received;
a thumbnail image generating module configured to generate thumbnail images from reception data of the programs being recorded, respectively, when determined that the number of programs being recorded is plural;
a recording stop selection screen generating module configured to set list frames for the respective programs being recorded in a recording stop selection screen, displaying pieces of program information of the programs being recorded in the thus-set list frames, respectively, and to display a thumbnail image of a selected list frame in clip form in the recording stop selection screen; and
a stop selection instructing module configured to allow selecting a program or programs whose recording should be stopped from the programs being recorded through the recording stop selection screen.

3. A method for stopping recording by a program recording apparatus capable of receiving and recording plural broadcast programs simultaneously, wherein the method comprising:
determining the number of programs being recorded when a recording stop instruction is received;
generating thumbnail images from reception data of the programs being recorded, respectively, if it is determined that the number of programs being recorded is plural;
setting areas for the respective programs being recorded in a recording stop selection screen, displaying pieces of program information of the programs being recorded in the thus-set areas, respectively, and displaying the thumbnail images in clip form in the thus-set areas, respectively; and
allowing to select a program or programs whose recording should be stopped from the programs being recorded through the recording stop selection screen.
